# EUROPEAN PATENT APPLICATION

(11) **EP 4 624 422 A1**
(43) Date of publication of application: **01.10.2025**
(21) Application number: 25160307.2
(22) Date of filing: 26.02.2025
(51) Int. Cl.: C01G 53/05, C01G 53/42, C01G 53/506, H01M 4/00

(54) **POSITIVE ELECTRODE MATERIAL PRECURSOR, POSITIVE ELECTRODE MATERIAL AND USE**

(30) Priority: 01.03.2024 CN 202410233179
(71) Applicant: CNGR Advanced Material Co., Ltd., Tongren, Guizhou 554300 (CN); Hunan CNGR New Energy Science & Technology Co., Ltd., Ningxiang Changsha, Hunan 410600 (CN)
(72) Inventor: YIN, Shuo, Tongren, Guizhou 554300 (CN); LI, Haoxiang, Tongren, Guizhou 554300 (CN); WANG, Yiqiao, Tongren, Guizhou 554300 (CN); CHANG, Haizhen, Tongren, Guizhou 554300 (CN); LI, Gui, Tongren, Guizhou 554300 (CN)
(74) Representative: Locas, Davide

(57) **Abstract**

The present application discloses a positive electrode material precursor, a positive electrode material and a use. The positive electrode material precursor includes a secondary particle composed of primary particles, and the secondary particle includes an inner core, an intermediate layer and an outer shell, where the intermediate layer has a porosity greater than that of the outer shell, and an average pore size of the intermediate layer ranges from 130 nm to 500 nm. In the present embodiment, the secondary particle of the precursor includes three layers: an inner layer (inner core), an intermediate layer and an outer layer (outer shell), where the intermediate layer is of a macroporous structure, so that lithium ions transmitted at a grain boundary have a shorter path, which is beneficial to increasing capacity; the outer shell has the porosity smaller than that of the intermediate layer, so that the outer shell is more compact than the intermediate layer in structure, a contact area between the secondary particle and an electrolytic solution can be reduced, occurrence of side reactions is reduced, and cycle performance of the material is ensured.

## Description

### TECHNICAL FIELD

The present application relates to the technical field of battery positive electrode materials, and specifically to a positive electrode material precursor, a positive electrode material and a use.

### BACKGROUND ART

With the rapid development of the new-energy industry, lithium-ion batteries, as novel secondary batteries, are widely used in the fields of mobile devices, electric automobiles, renewable energy sources, etc. due to advantages such as high energy density, high working voltage, small self-discharge, and environmental friendliness.

With the continuous increase in nickel content of a positive electrode material, while obtaining a high energy density, structural stability becomes worse and worse, thus further affecting cycle performance of the lithium-ion batteries.

Therefore, while ensuring high capacity, how to maintain the cycle performance of the positive electrode material without deterioration, especially to maintain the cycle performance of a high-nickel positive electrode material, is currently a research focus of the lithium-ion batteries.

### SUMMARY

The present application aims at providing a positive electrode material precursor, a positive electrode material and a use, so as to improve cycle performance of the positive electrode material while maintaining capacity of the positive electrode material.

The present application is implemented as follows.

In the first aspect, the present application provides a positive electrode material precursor. The precursor includes a secondary particle composed of primary particles, and the secondary particle includes an inner core, an intermediate layer and an outer shell, where the intermediate layer has a porosity greater than that of the outer shell, and an average pore size of the intermediate layer ranges from 130 nm to 500 nm.

In optional embodiments, the primary particles are plate-shaped.

In optional embodiments, the primary particles have an average length ranging from 200 nm to 1200 nm, an average width ranging from 100 nm to 500 nm, and an average aspect ratio ranging from 1 to 6; and

In optional embodiments, the primary particles have an average length ranging from 800 nm to 1000 nm, and an average width ranging from 200 nm to 400 nm.

In optional embodiments, the outer shell has a porosity less or equal to 3%;

In optional embodiments, the outer shell has a thickness between 1/22 and 1/12 of a particle size of the secondary particle.

In optional embodiments, a difference Δ between a porosity of the intermediate layer and a porosity of the outer shell (the intermediate layer - the outer layer) ranges from 5% to 20%, optionally from 5.2% to 15%.

In optional embodiments, the intermediate layer has a porosity ranging from 5% to 20%;

In optional embodiments, the intermediate layer has an average pore size ranging from 150 nm to 300 nm.

In optional embodiments, the intermediate layer has a thickness between 1/2.5 and 1/5 of a particle size of the secondary particle.

In optional embodiments, a porosity of the intermediate layer is greater than that of the inner core, and the porosity of the inner core is greater than that of the outer shell.

In optional embodiments, the inner core has a porosity ranging from 2% to 15%;

In optional embodiments, the inner core has a radius between 1/4 and 1/10 of a particle size of the secondary particle.

In optional embodiments, the positive electrode material precursor has a specific surface area ranging from 3 m²/g to 20 m²/g, optionally from 4 m²/g to 12 m²/g.

In optional embodiments, the positive electrode material precursor has a tap density ranging from 1.5 g/cm³ to 3.0 g/cm³.

In optional embodiments, a particle size D50 of the positive electrode material precursor ranges from 8 µm to 20 µm.

In optional embodiments, a proportion of a molar amount of nickel in a total molar amount of metallic elements in the positive electrode material precursor is greater than or equal to 50%; and optionally, the proportion of the molar amount of nickel in the total molar amount of metallic elements is greater than or equal to 70%.

In optional embodiments, a general chemical formula of the precursor is NiₓCo_{y}Mn_{z}Mₐ(OH)₂, where 0.5≤x<1, 0≤y≤0.5, 0≤z≤0.5, and x+y+z+a=1, and a mass fraction of M in the precursor is less than 10,000 ppm; optionally, the M is at least one of Al, Mg, Zr, W, Si, B, P, Ca, Nb and Ti; and optionally, 0.7≤x<1, 0≤y≤0.3, and 0≤z≤0.3.

In optional embodiments, a proportion of a molar amount of nickel in a total molar amount of metallic elements in the outer shell is less than a proportion of a molar amount of nickel in a total molar amount of metallic elements in the intermediate layer or the inner core.

In the second aspect, the present disclosure provides a preparation method for a positive electrode material precursor, including:
preparing a metal mixed solution containing a nickel element, a precipitant solution and a complexing agent solution;
injecting the metal mixed solution, a precipitant and a complexing agent into a first base solution, and performing a first co-precipitation reaction, so as to render a first intermediate product, where the first base solution includes the precipitant, the complexing agent and water;
injecting the metal mixed solution, the precipitant and the complexing agent into a second base solution, and performing a second co-precipitation reaction, so as to render a second intermediate product, where the second base solution includes the first intermediate product, the precipitant, the complexing agent and water; and
injecting the metal mixed solution, the precipitant and the complexing agent into a reaction solution containing the second intermediate product, and performing a third co-precipitation reaction, so as to render particles of the precursor.

In optional embodiments, at least one of following a-h is met:
a. a total concentration of metallic elements in the metal mixed solution ranges from 0.5 mol/L to 5.0 mol/L, optionally from 1.0 mol/L to 2.0 mol/L;
   optionally, the precipitant is sodium hydroxide; and optionally, a concentration of the precipitant in the precipitant solution ranges from 20 wt% to 50 wt%, optionally from 30 wt% to 35 wt%; and
   the complexing agent is aqueous ammonia; and optionally, a concentration of the complexing agent in the complexing agent solution ranges from 10 wt% to 50 wt%, optionally from 20 wt% to 25 wt%;
b, pH of the reaction solution in the third co-precipitation reaction is higher than pH of a reaction solution in the first co-precipitation reaction, and the pH of the reaction solution in the first co-precipitation reaction is higher than pH of a reaction solution in the second co-precipitation reaction;
c, an ammonia concentration of the reaction solution in a process of the third co-precipitation reaction is greater than an ammonia concentration of a reaction solution in the second co-precipitation reaction;
d, a stirring speed in a process of the third co-precipitation reaction is greater than that in a process of the second co-precipitation reaction;
e, in a process of the first co-precipitation reaction, pH of a reaction solution is maintained at 10.0-10.5, optionally 10.35-10,45; and optionally, an ammonia concentration of the reaction solution is maintained at 3-5 g/L, optionally 3.5-4.5 g/L;
   optionally, pH of the first base solution ranges from 11.00 to 12.00; and
   optionally, based on a total capacity of a reaction kettle being N, a flow rate of the metal mixed solution is gradually increased from (0.8-1.2)%N/h to (4.5-5.5)%N/h within 4-8 h; and optionally, a flow rate of the precipitant solution is between 0.3 times and 0.4 times the flow rate of the metal mixed solution;
f, in a process of the second co-precipitation reaction, pH of a reaction solution is maintained at 9.5-11.0, optionally 10.00-10.70; and optionally, an ammonia concentration of the reaction solution is maintained at 4.0-7.0 g/L, optionally4.0-6.0 g/L;
   optionally, pH of the second base solution ranges from 10.00 to 10.90; and
   optionally, based on a total capacity of a reaction kettle being N, a flow rate of the metal mixed solution is gradually increased from (2-3)%N/h to (8-10)%N/h within 4-8 h; and optionally, a flow rate of the precipitant solution is between 0.3 times and 0.4 times the flow rate of the metal mixed solution;
g, in a process of the third co-precipitation reaction, pH of the reaction solution is maintained at 10.0-11.0; and optionally, an ammonia concentration of the reaction solution is maintained at 7.0-9.0 g/L;
   optionally, based on a total capacity of a reaction kettle being N, a flow rate of the metal mixed solution is (8-10)%N/h; and optionally, a flow rate of the precipitant solution is between 0.3 times and 0.4 times the flow rate of the metal mixed solution; and
h, the first co-precipitation reaction and/or the second co-precipitation reaction and/or the third co-precipitation reaction are carried out under inert-gas protection.

In the third aspect, the present disclosure provides a positive electrode material, where a raw material thereof includes the positive electrode material precursor according to any one of the preceding embodiments or the positive electrode material precursor obtained by the method according to the preceding embodiments.

In the fourth aspect, the present disclosure provides a lithium-ion battery, including the positive electrode material according to the preceding embodiments.

In the fifth aspect, the present disclosure provides an electrical device, including the lithium-ion battery according to the preceding embodiments.

The present application has following beneficial effects.

In the present embodiment, the secondary particle of the precursor includes three layers: an inner layer (inner core), an intermediate layer and an outer layer (outer shell), where the intermediate layer is of a macroporous structure, so that lithium ions transmitted at a grain boundary have a shorter path, which is beneficial to increasing capacity; the outer shell has the porosity smaller than that of the intermediate layer, so that the outer shell is more compact than the intermediate layer in structure, a contact area between the secondary particle and an electrolytic solution can be reduced, occurrence of side reactions is reduced, and cycle performance of the material is ensured.

### BRIEF DESCRIPTION OF DRAWINGS

In order to more clearly illustrate technical solutions of embodiments of the present application, drawings which need to be used in the embodiments will be briefly introduced below, and it should be understood that the drawings merely show some embodiments of the present application, and thus should not be construed as limitation to the scope, and those ordinarily skilled in the art still could obtain other relevant drawings according to these drawings, without using any inventive efforts.
FIG. 1 is an electron microscope CP image of a secondary particle in Example 1 (the CP image is a cross-sectional image of the secondary particle obtained by argon ion polishing).
FIG. 2 is an electron microscope CP image of a secondary particle in Comparative Example 1.
FIG. 3 is an electron microscope CP image of a secondary particle in Comparative Example 3.
FIG. 4 is an electron microscope CP image of a secondary particle in Comparative Example 4.
FIG. 5 is an SEM image of the secondary particle in Example 1.
FIG. 6 is an SEM image of the secondary particle in Comparative Example 1.
FIG. 7 is an electron microscope CP image of a secondary particle in Example 5.
FIG. 8 is an electron microscope CP image of a secondary particle in Example 8.

### DETAILED DESCRIPTION OF EMBODIMENTS

In order to make objectives, technical solutions and advantages of embodiments of the present application clearer, the technical solutions in the embodiments of the present application will be described below clearly and completely. Examples, for which no concrete conditions are specified, are carried out according to conventional conditions or conditions recommended by manufactures. Where manufacturers of reagents or instruments used are not specified, they are conventional products commercially available.

An embodiment of the present application provides a positive electrode material precursor, where the precursor includes a secondary particle composed of primary particles, and the secondary particle includes an inner core, an intermediate layer and an outer shell, where the intermediate layer has a porosity greater than that of the outer shell, and an average pore size of the intermediate layer ranges from 130 nm to 500 nm.

In the present embodiment, the secondary particle of the precursor includes three layers: an inner layer (inner core), an intermediate layer and an outer layer (outer shell), where the intermediate layer is of a macroporous structure, so that lithium ions transmitted at a grain boundary have a shorter path, which is beneficial to increasing capacity; the outer shell has the porosity smaller than that of the intermediate layer, so that the outer shell is more compact than the intermediate layer in structure, a contact area between the secondary particle and an electrolytic solution can be reduced, occurrence of side reactions is reduced, and cycle performance of the material is ensured.

Specifically, with regard to the pore size of the intermediate layer, on the one hand, the macroporous structure is beneficial to shortening the path of the lithium ions transmitted at the grain boundary, and on the other hand, a too large pore size will reduce intensity of the secondary particle, so as to reduce the cycle performance; therefore, in the present embodiment, the average pore size of the intermediate layer ranges from 130 nm to 500 nm, and specifically can be 130 nm, 150 nm, 180 nm, 210 nm, 220 nm, 230 nm, 240 nm, 270 nm, 300 nm, 350 nm, 400 nm, 450 nm, 500 nm or any value between 130 nm and 500 nm, such as between 130 nm and 210 nm, between 130 nm and 240 nm, between 150 nm and 210 nm, between 150 nm and 240 nm, between 150 nm and 300 nm, between 180 nm and 300 nm, between 180 nm and 400 nm, between 210 nm and 300 nm, between 210 nm and 500 nm, and between 220 nm and 300 nm.

It should be noted that, in the present application, CP images are analyzed using image analysis software (Avizo), to calculate an average pore size of the CP images (5000 times to 10000 times), and the pore sizes of different regions are calculated by "average pore size = sum of fitting diameters of each pore/the number of pores". A calculation principle of the fitting diameter of the pore is to first identify an area of the pore by software, then regard the area as area of a circle, and calculate a fitting radius using the area formula of circle S=πr², and then twice the fitting radius is the fitting diameter. In order to enable the average pore size of the precursor material to be closer to an actual average pore size, secondary particles with a diameter close to D50 of the precursor material can be selected for test, for example, selecting secondary particles with D50±1 µm as much as possible. In addition, CP images of a plurality of (e.g. 2, 3, 5) secondary particles can also be selected to test pore sizes, and an average value thereof is taken.

It should be noted that, in the present application, porosity of the CP images (5000 times to 10000 times) is calculated using image analysis software (ImageJ), and the porosities of different regions are calculated by "porosity = pore area of each region/cross-sectional area of each region × 100%".

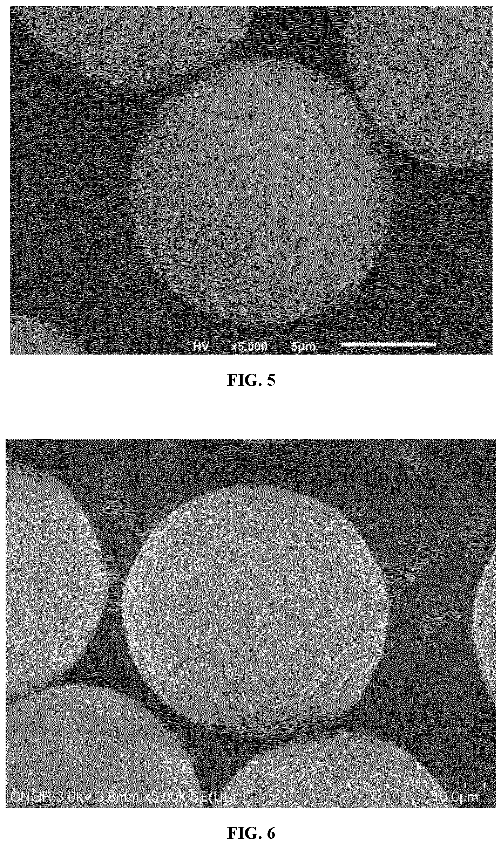

In optional embodiments, the primary particles are plate-shaped (as shown in FIG. 5). Compared with needle-shaped or spindle-shaped or fine (as shown in FIG. 6) primary particles, the plate-shaped primary particles are beneficial to reducing the number of grain boundaries, and a small number of grain boundaries can reduce the occurrence of side reactions, which is beneficial to improving cycle and storage performances.

In optional embodiments, an average length of the primary particles ranges from 200 nm to 1200 nm, and specifically can be 200 nm, 400 nm, 600 nm, 800 nm, 1000 nm, 1200 nm or any value between 200 nm and 1200 nm; an average width ranges from 100 nm to 500 nm, and specifically can be 100 nm, 200 nm, 300 nm, 400 nm, 500 nm or any value between 100 nm and 500 nm; and an average aspect ratio is 1-6, and specifically can be 1, 2, 3, 4, 5, 6 or any value between 1 and 6. Compared with finer primary particles, the primary particles with the average length and width being within the ranges of the present embodiment can reduce the number of grain boundaries, and the smaller number of grain boundaries can reduce the occurrence of side reactions, which is beneficial to improving the cycle and storage performances.

It should be noted that, in the present embodiment, a test method for the length and width of the primary particles is as follows: measuring, with Nano Measurer software, length and width of the primary particles on a surface of the secondary particle in an SEM image magnified by N times (for example, 5000 times), regarding the longest axis of a single primary particle as the length thereof, regarding a short axis passing through a midpoint measured in a direction perpendicular to the longest axis as its width, taking data of at least 10 primary particles, and taking an average value, so as to render the average width and the average length of the primary particles, and calculate the average aspect ratio. The average length and average width of the primary particles herein are all obtained by this method.

In some optional embodiments, the primary particles have an average length ranging from 800 nm to 1,000 nm, and an average width ranging from 200 nm to 400 nm.

In optional embodiments, the porosity of the outer shell is less or equal to 3%, and specifically can be 3%, 2%, 1%, or any value less or equal to 3%.

In optional embodiments, a difference Δ between the porosity of the intermediate layer and the porosity of the outer shell (the intermediate layer - the outer layer) ranges from 5% to 20%, optionally from 5.2% to 15%, and specifically can be 5%, 5.5%, 6.5%, 8.5%, 12.5%, 15.5%, 18.5%, 20% or any value between 5% and 20%.

A low porosity of the outer shell enables the outer shell to be more compact than the intermediate layer, and the compact outer shell is beneficial to reducing the contact area with the electrolytic solution, reducing the occurrence of side reactions, and improving the cycle performance of the battery.

In optional embodiments, a thickness of the outer shell is between 1/22 and 1/12 of a particle size of the secondary particle. If a proportion of the thickness of the outer shell is too small, the contact with the electrolytic solution cannot be effectively reduced, but if the proportion of the thickness of the outer shell is too large, although it is beneficial to improving the cycle performance of the battery, capacity loss of the material will be increased. Hence, under normal conditions, on the premise of ensuring material strength and reducing the contact area with the electrolytic solution, the outer shell can be provided to be as thin as possible, so as to increase a proportion of the intermediate layer, thus being beneficial to using the capacity.

In optional embodiments, the porosity of the intermediate layer ranges from 5% to 20%, and specifically can be 5%, 8%, 11%, 14%, 17%, 20% or any value between 5% and 20%. The intermediate layer has a large porosity, so that it is beneficial to shortening the path of transmission of the lithium ions.

In optional embodiments, the average pore size of the intermediate layer ranges from 150 nm to 300 nm.

In optional embodiments, a thickness of the intermediate layer is between 1/2.5 and 1/5 of the particle size of the secondary particles, and specifically can be 1/2.5 (0.4), 1/3 (0.333), 1/3.3 (0.303), 1/3.4 (0.294), 1/3.5 (0.285), 1/4 (0.25), 1/4.5 (0.222), 1/5 (0.2) or any value between 1/2.5 and 1/5. While the particle strength is ensured, the intermediate layer can be as thick as possible.

In optional embodiments, the porosity of the intermediate layer is greater than that of the inner core, and the porosity of the inner core is greater than that of the outer shell.

In optional embodiments, the porosity of the inner core ranges from 2% to 15%, and specifically can be 2%, 4%, 6%, 8%, 10%, 12%, 14%, 15% or any value between 2% and 15%. The inner core has a low porosity, which is lower than that of the intermediate layer, and is relatively compact, so as to be beneficial to improving the strength of the secondary particles. However, if the inner core and the outer shell are both relatively compact, it is unfavorable for the secondary particles to release stress; therefore, the inner core should not be too compact.

In optional embodiments, a radius of the inner core is between 1/4 and 1/10 (optionally between 1/7 and 1/8) of the particle size of the secondary particles, and specifically can be 1/7, 1/7.2, 1/7.4, 1/7.6, 1/7.8, 1/8 or any value between 1/4 and 1/10. While the stability of the secondary particles is maintained, thicknesses of the inner core and the outer shell are reduced as much as possible, so as to increase the proportion of the intermediate layer, thus being beneficial to using the capacity. The thickness of the intermediate layer divided by D50 of the particle size of the secondary particles is the proportion of the intermediate layer.

In optional embodiments, a specific surface area of the positive electrode material precursor ranges from 3 m²/g to 20 m²/g, and specifically can be 3 m²/g, 6 m²/g, 8 m²/g, 10 m²/g, 12 m²/g, 16 m²/g, 20 m²/g or any value between 3 m²/g and 20 m²/g. Optionally, the specific surface area of the secondary particles ranges from 4 m²/g to 12 m²/g.

In optional embodiments, a tap density of the positive electrode material precursor ranges from 1.5 g/cm³ to 3.0 g/cm³, and specifically can be 1.5 g/cm³, 2 g/cm³, 2.5 g/cm³, 3.0 g/cm³ or any value between 1.5 g/cm³ and 3.0 g/cm³.

The specific surface area and tap density of the secondary particles are related to the porosity and pore size of the secondary particles, and relationships between the porosity and pore size and material performance are as described above.

In optional embodiments, D50 of the positive electrode material precursor ranges from 8 µm to 20 µm, and specifically can be 8 µm, 10 µm, 12 µm, 14 µm, 16 µm, 18 µm, 20 µm or any value between 8 µm and 20 µm.

In optional embodiments, a proportion of a molar amount of nickel in a total molar amount of metallic elements in the positive electrode material precursor is greater than or equal to 50%. Optionally, the proportion of the molar amount of nickel in the total molar amount of metallic elements is greater than or equal to 70%; a medium- and high-nickel ternary positive electrode material has a higher nickel content, a higher energy density, and poorer structural stability than that of other ternary positive electrode materials, and has more obvious effect when being applied to solutions of the present application.

In optional embodiments, a general chemical formula of the precursor is NiₓCo_{y}Mn_{z}Mₐ(OH)₂, where 0.5≤x<1, 0≤y≤0.5, 0≤z≤0.5, and x+y+z+a=1, and a mass fraction of M in the precursor is less than 10,000 ppm; and optionally, the M is at least one of Al, Mg, Zr, W, Si, B, P, Ca, Nb and Ti.

In optional embodiments, 0.7≤x<1, 0≤y≤0.3, and 0≤z≤0.3.

In optional embodiments, a proportion of a molar amount of nickel in a total molar amount of metallic elements in the outer shell is less than a proportion of a molar amount of nickel in a total molar amount of metallic elements in the intermediate layer or the inner core.

A small amount of other elements (such as metallic elements) is doped in the precursor, so that the cycle performance of the material can be improved to some extent, and if a doping amount of M is too large, the capacity of the material may be affected.

In the second aspect, the present application provides a preparation method for a positive electrode material precursor, including:
preparing a metal mixed solution containing a nickel element, a precipitant solution and a complexing agent solution;
injecting the metal mixed solution, a precipitant and a complexing agent into a first base solution, and performing a first co-precipitation reaction, so as to render a first intermediate product, where the first base solution includes the precipitant, the complexing agent and water;
injecting the metal mixed solution, the precipitant and the complexing agent into a second base solution, and performing a second co-precipitation reaction, so as to render a second intermediate product, where the second base solution includes the first intermediate product, the precipitant, the complexing agent and water; and
injecting the metal mixed solution, the precipitant and the complexing agent into a reaction solution containing the second intermediate product, and performing a third co-precipitation reaction, so as to render particles of the precursor.

In the preparation method of the present embodiment, after the first co-precipitation reaction is ended, the first intermediate product (precursor crystal seed, i.e., an inner core of the precursor particle) is obtained; after the second co-precipitation reaction is ended, the second intermediate product (an intermediate layer formed on the inner core, i.e., an intermediate layer of the precursor particle) is obtained; and an outer shell is formed on the intermediate layer through the third co-precipitation reaction. In some embodiments, centrifugation, washing, drying and sieving are performed on the reaction solution after the third co-precipitation reaction, so as to render the precursor particle.

In optional embodiments, at least one of the following a-h is met:
a, a total concentration of metallic elements in the metal mixed solution ranges from 0.5 mol/L to 5.0 mol/L, optionally from 1.0 mol/L to 2.0 mol/L;
   optionally, the precipitant is sodium hydroxide; and optionally, a concentration of the precipitant in the precipitant solution ranges from 20 wt% to 50 wt%, optionally from 30 wt% to 35 wt%; and
   optionally, the complexing agent is aqueous ammonia; and optionally, a concentration of the complexing agent in the complexing agent solution ranges from 10 wt% to 50 wt%, optionally from 20 wt% to 25 wt%;
b, pH of the reaction solution in the third co-precipitation reaction is higher than pH of a reaction solution in the first co-precipitation reaction, and the pH of the reaction solution in the first co-precipitation reaction is higher than pH of a reaction solution in the second co-precipitation reaction;
c, an ammonia concentration of the reaction solution in a process of the third co-precipitation reaction is greater than an ammonia concentration of a reaction solution in the second co-precipitation reaction;
d, a stirring speed in a process of the third co-precipitation reaction is greater than that in a process of the second co-precipitation reaction;
e, in a process of the first co-precipitation reaction, pH of a reaction solution is maintained at 10.0-10.5, optionally 10.35-10.45; and optionally, an ammonia concentration of the reaction solution is maintained at 3-5 g/L, optionally 3.5-4.5 g/L;
   optionally, pH of the first base solution ranges from 11.00 to 12.00; and
   optionally, based on a total capacity of a reaction kettle being N, a flow rate of the metal mixed solution is gradually increased from (0.8-1.2)%N/h to (4.5-5.5)%N/h within 4-8 h; and optionally, a flow rate of the precipitant solution is between 0.3 times and 0.4 times the flow rate of the metal mixed solution;
f, in a process of the second co-precipitation reaction, pH of a reaction solution is maintained at 9.5-11.0, optionally 10.00-10.70; and optionally, an ammonia concentration of the reaction solution is maintained at 4.0-7.0 g/L, optionally 4.0-6.0 g/L;
   optionally, pH of the second base solution ranges from 10.00 to 10.90; and
   optionally, based on a total capacity of a reaction kettle being N, a flow rate of the metal mixed solution is gradually increased from (2-3)%N/h to (8-10)%N/h within 4-8 h; and optionally, a flow rate of the precipitant solution is between 0.3 times and 0.4 times the flow rate of the metal mixed solution;
g, in a process of the third co-precipitation reaction, pH of the reaction solution is maintained at 10.0-11.0; optionally, an ammonia concentration of the reaction solution is maintained at 7.0-9.0 g/L; optionally, based on a total capacity of a reaction kettle being N, a flow rate of the metal mixed solution is (8-10)%N/h; and optionally, a flow rate of the precipitant solution is between 0.3 times and 0.4 times the flow rate of the metal mixed solution; and
h, the first co-precipitation reaction and/or the second co-precipitation reaction and/or the third co-precipitation reaction are carried out under inert-gas protection.

In the preparation method of the present application, the pore size, porosity and dimension and shape of the primary particles are adjusted mainly by adjusting the pH, ammonia concentration and flow rate of the metal mixed solution of the reaction solutions, on the premise of the same other conditions, specifically, reducing the pH of the reaction solutions, reducing the ammonia concentration in the reaction solutions, and increasing the flow rate of the metal mixed solution are beneficial to increasing the pore size and porosity; and increasing the pH of the reaction solutions and increasing the ammonia concentration in the reaction solutions are beneficial to obtaining plate-shaped primary particles. Therefore, when selecting parameters in the preparation method of the present application, the pore size, porosity and morphology of the primary particles should be considered comprehensively.

It should be noted that, in a case where a preparation method for a product is known, a product structure can be layered according to changes (different stages) in conditions of co-precipitation reactions. As described herein, according to the number of changes in co-precipitation reaction conditions, products are divided as having a three-layer structure and a two-layer structure, where the crystal seed formed by the first co-precipitation reaction is the inner core of the precursor, the second co-precipitation reaction forms the intermediate layer of the precursor, and the third co-precipitation reaction forms the outer shell of the precursor. In the above, where there are only the first co-precipitation reaction and the second co-precipitation reaction, it is regarded as having no intermediate layer, and it is only a precursor with a two-layer structure of the inner core and the outer shell.

In the present application, for a product divided as having the three-layer structure, it is embodied in an SEM image of a cross section as: taking a center of the secondary particle as an origin (midpoint of the longest axis of cross section of the secondary particle), a region within a circle having a radius of 1/7-1/8 of a particle size of the secondary particle is regarded as the inner core; making a circle by taking 3/8-5/11 of the particle size of the secondary particle as radius, a region from the outside of the circle to a surface of the secondary particle is regarded as the outer shell; and an intermediate region between the inner core and the outer shell of the secondary particle is regarded as the intermediate layer.

In addition, in a case where a preparation method for a certain product is unknown, a structure of any product can also be divided into three layers according to a particle size for comparison, where taking a center of a secondary particle as an origin (midpoint of the longest axis of the secondary particle), a region within a circle having a radius of 1/7-1/8 of the particle size of the secondary particle is regarded as an inner core; making a circle by taking 3/8-5/11 of the particle size of the secondary particle as radius, a region from the outside of the circle to a surface of the secondary particle is regarded as an outer shell; and an intermediate region between the inner core and the outer shell of the secondary particle is regarded as the intermediate layer.

In the third aspect, the present application provides a positive electrode material, a raw material of which includes the positive electrode material precursor according to any one of the preceding embodiments or the positive electrode material precursor obtained by the method according to the preceding embodiments.

In the fourth aspect, the present application provides a lithium-ion battery, including the positive electrode material described in the preceding embodiments.

In the fifth aspect, the present application provides an electrical device, including the lithium-ion battery according to the preceding embodiments.

Features and performance of the present application will be further described in detail below with reference to examples.

### Example 1

The present example provided a positive electrode material precursor and a preparation method therefor, where the preparation method therefor included following steps:
step 1: formulation of solutions: selecting nickel, cobalt, and manganese soluble salts as a raw material, formulating a metal mixed solution with a concentration of 2.0 mol/L according to a molar ratio of Ni: Co: Mn = 92.5:5:2.5, formulating a sodium hydroxide aqueous solution with a concentration of 32 wt%, and formulating an ammonia solution with a concentration of 21 wt% as a complexing agent.
step 2 (complexation reaction for crystal seed): adding a certain amount of pure water, NaOH aqueous solution, and aqueous ammonia into a reaction kettle, and stirring until uniform, so as to render a first base solution with pH 11.50; stirring under a condition of nitrogen protection, and feeding the metal mixed solution, NaOH aqueous solution and aqueous ammonia into the reaction kettle loaded with the first base solution, a flow rate of the NaOH aqueous solution always being 0.37 times a flow rate of the metal mixed solution, based on a total capacity of the reaction kettle being N, the flow rate of the metal mixed solution being gradually increased from 1%N/h to 5%N/h within 8 h, and discharging a mother liquor by concentration equipment, at a discharging rate consistent with a total feeding rate;
in a reaction process, by finely adjusting the flow rates of the NaOH aqueous solution and aqueous ammonia, gradually adjusting the pH to be within a range of 10.35-10.45 and the ammonia concentration to fluctuate within a range of 3.5-4.5 g/L within 10 h after feeding, and after reacting for a certain period of time, when D50 reaching 3.8 µm, performing a centrifugation treatment on slurry, so as to render a nickel cobalt manganese hydroxide crystal seed with an average particle size D50 of 3.8 µm;
step 3 (complexation reaction for growth): putting a certain amount of the nickel cobalt manganese hydroxide crystal seed in step 2 into the reaction kettle, and at the same time, adding a certain amount of pure water, NaOH solution and aqueous ammonia into the reaction kettle, and stirring until uniform so as to render a second base solution with pH 10.30; under stirring, constant temperature and nitrogen protection, feeding the metal mixed solution, NaOH aqueous solution and aqueous ammonia into the reaction kettle loaded with the second base solution, a flow rate of the NaOH aqueous solution always being 0.37 times a flow rate of the metal mixed solution, and based on a total capacity of the reaction kettle being N, gradually increasing the flow rate of the metal mixed solution from 2%N/h to 8%N/h; in a reaction process, when a volume of a reaction solution in the reaction kettle reaching 60% of a total volume of the reaction kettle, turning on a concentrator, and discharging a mother liquor by concentration equipment, at a discharge rate consistent with a total feeding rate;
in a reaction process, by finely adjusting the flow rates of the NaOH aqueous solution and aqueous ammonia, adjusting the pH to be within a range of 10.00-10.10 within 8 h after feeding, and the ammonia concentration to fluctuate within a range of 5.5-6.0 g/L;
step 4: based on reaction conditions in step 3, finely adjusting the flow rates of the NaOH aqueous solution and aqueous ammonia, adjusting a stirring rotational speed of endpoint reaction to be 55 r/min, controlling endpoint pH at 10.60-10.70 and endpoint ammonia concentration at 7.5-8.0 g/L, reducing the stirring rotational speed, and increasing the pH and ammonia, where in the reaction in step 4, stirring intensity of the reaction was reduced, and a solution supersaturation degree was reduced, which facilitated interface growth of crystals; moreover, in a process of the reaction in step 4, system pH and ammonia concentration were increased, which was beneficial to stabilizing strength of crystal grains, thus forming a compact outer shell structure of a crystal facet; and when particle size D50 of slurry reached 13.0-14.0 µm, feeding was stopped; and
step 5: post-treatment: after reacting for a certain period of time, the particle size reaching a designated range, performing centrifugal washing on a reaction product of step 4, and then performing drying and sieving so as to render a nickel-cobalt-manganese ternary precursor powdered sample having a core-shell structure.

### Example 2

The present example provided a positive electrode material precursor and a preparation method therefor. The preparation method therefor was different from that in Example 1 mainly in that, in step 3, the pH of the second base solution was 10.40, and the flow rate of the metal mixed solution was gradually increased from 2.5%N/h to 9.0%N/h; in the reaction process, by finely adjusting the flow rates of the NaOH aqueous solution and aqueous ammonia, the pH was adjusted to be within a range of 10.00-10.10, and the ammonia concentration fluctuated within a range of 4.0-5.0 g/L within 6 h after feeding.

### Example 3

The present example provided a positive electrode material precursor and a preparation method therefor. The preparation method therefor was different from that in Example 1 mainly in that, in step 3, the pH of the second base solution was 10.40, and the flow rate of the metal mixed solution was gradually increased from 3%N/h to 10%N/h; in the reaction process, by finely adjusting the flow rates of the NaOH aqueous solution and aqueous ammonia, the pH was adjusted to be within a range of 9.90-10.00, and the ammonia concentration fluctuated within a range of 4.0-5.0 g/L within 4 h after feeding.

### Example 4

The present example provided a positive electrode material precursor and a preparation method therefor. The preparation method therefor was different from that in Example 1 mainly in that, when the particle size D50 of the crystal seed in step 2 reached 1.8 µm, it went to step 3; in the reaction process of step 3, by finely adjusting the flow rates of the NaOH aqueous solution and aqueous ammonia, the pH was adjusted to be within a range of 9.85-9.95 and the ammonia concentration fluctuated within a range of 4.0-4.5 g/L within 4 h after feeding; when D50 reached 10-11 µm, it went to step 4, and in the reaction process of step 4, the endpoint concentration was controlled to be 8.0-8.5 g/L; and when particle size D50 of slurry reached 12±0.5 µm, feeding was stopped.

### Example 5

The present example provided a positive electrode material precursor and a preparation method therefor. The preparation method therefor was different from that in Example 1 mainly in that, when the particle size D50 of the crystal seed in step 2 reached 1.8 µm, it went to step 3; in step 3, the pH of the second base solution was 10.30, the flow rate of the metal mixed solution was gradually increased from 2%N/h to 9%N/h; in the reaction process of step 3, by finely adjusting the flow rates of the NaOH aqueous solution and aqueous ammonia, the pH was adjusted to be within a range of 9.80-9.90 and the ammonia concentration fluctuates within a range of 4.0-4.5 g/L within 6 h after feeding; when D50 reached about 10 µm, it went to step 4, and in the reaction process of step 4, the endpoint concentration was controlled to be 8.0-8.5 g/L; and when particle size D50 of slurry reached about 12 µm, feeding was stopped.

### Example 6

The present example provided a positive electrode material precursor and a preparation method therefor. The preparation method therefor was different from that in Example 1 mainly in that, when the particle size D50 of the crystal seed in step 2 reached 1.8 µm, it went to step 3; in the reaction process of step 3, by finely adjusting the flow rates of the NaOH aqueous solution and aqueous ammonia, the pH was adjusted to be within a range of 9.70-9.80 and the ammonia concentration fluctuates within a range of 3.5-4.0 g/L within 8 h after feeding; when D50 reached 11.5-12.5 µm, it went to step 4, and in the reaction process of step 4, an endpoint concentration was controlled to be 8.0-8.5 g/L; and when particle size D50 of slurry reached 13.5-14 µm, feeding was stopped.

### Example 7

The present example provided a positive electrode material precursor and a preparation method therefor. The preparation method therefor was different from that in Example 1 mainly in that, when the particle size D50 of the crystal seed in step 2 reached 2.8 µm, it went to step 3; when D50 reached 10±0.5 µm, it went to step 4, and in the reaction process of step 4, by finely adjusting the flow rates of the NaOH aqueous solution and aqueous ammonia, the pH was adjusted to be within a range of 10.60-10.70 and the ammonia concentration fluctuates within a range of 7.0-8.0 g/L; and when particle size D50 of slurry reached 12±0.5 µm, feeding was stopped.

### Example 8

The present example provided a positive electrode material precursor and a preparation method therefor. The preparation method therefor was different from that in Example 4 mainly in that, when the particle size D50 of the crystal seed in step 2 reached 3.3 µm, it went to step 3; when D50 reached 10±0.5 µm, it went to step 4, and in the reaction process of step 4, by finely adjusting the flow rates of the NaOH aqueous solution and aqueous ammonia, the pH was adjusted to be within a range of 10.80-10.85 and the ammonia concentration fluctuated within a range of 8.5-9.0 g/L; and when particle size D50 of slurry reached 12±0.5 µm, feeding was stopped.

### Comparative Example 1

The present comparative example provided a positive electrode material precursor and a preparation method therefor, where the preparation method therefor included following steps:
step 1: formulation of solutions: selecting nickel, cobalt, and manganese soluble salts as a raw material, formulating a metal mixed solution with a concentration of 2.0 mol/L according to a molar ratio of Ni: Co: Mn = 92.5:5:2.5, formulating a sodium hydroxide aqueous solution with a concentration of 32 wt%, and formulating an ammonia solution with a concentration of 21 wt% as a complexing agent;
step 2: adding pure water, aqueous ammonia and sodium hydroxide aqueous solution into a reaction kettle, adjusting an ammonia concentration and pH, where system was adjusted to have the ammonia concentration of 4.0 g/L, and pH 11.90; raising a reaction temperature to 60 °C, controlling a stirring rotational speed at 220 r/min, and after reaching the conditions, introducing the nickel cobalt manganese metal mixed solution, a caustic soda liquid, and aqueous ammonia simultaneously to perform a co-precipitation reaction;
in a reaction process, by finely adjusting flow rates of the NaOH aqueous solution and aqueous ammonia, gradually adjusting the pH to be within a range of 11.5-11.0 and enabling the ammonia concentration to fluctuate within a range of 3.5-4.5 g/L after feeding, and after reacting for a certain period of time, when D50 reaching 4.2 µm, performing a centrifugation treatment on slurry, so as to render a nickel cobalt manganese hydroxide crystal seed with D50 of 4.2 µm, where the flow rate of the metal mixed solution was gradually increased from 1.8%N/h to 4%N/h, and the flow rate of the NaOH aqueous solution was 1.48%N/h;
step 3: putting a certain amount of the nickel cobalt manganese hydroxide crystal seed in step 2 into the reaction kettle, adding a certain amount of pure water, NaOH solution, and aqueous ammonia into the reaction kettle, and stirring until uniform so as to render a second base solution with pH 10.52; under stirring, constant temperature, and nitrogen protection, feeding the metal mixed solution, NaOH aqueous solution and aqueous ammonia into the reaction kettle loaded with the second base solution, where the flow rate of the metal mixed solution was gradually increased from 1.8%N/h to 5%N/h, endpoint pH was controlled to be 10.7 and ammonia concentration 6.0 g/L;
step 4: based on reaction conditions in step 3, adjusting a stirring rotational speed of the reaction to be 60 r/min, controlling endpoint pH to be 10.65, where in the reaction of step 4, stirring intensity was reduced, and a solution supersaturation degree was reduced, which facilitated interface growth of crystals; moreover, in a process of the reaction in step 4, system pH was increased, which was beneficial to stabilizing strength of crystal grains, thus forming a compact outer shell structure of a crystal facet; when a volume of a reaction solution in the reaction kettle reached 60% of a total volume of the reaction kettle, a concentrator was turned on, slurry entered circulation, a mother liquor was discharged to the outside, and when particle size D50 of slurry reached 13.3 µm, feeding was stopped; and
step 5: post-treatment: after reacting for a certain period of time, the particle size reaching a designated range, performing centrifugal washing on a reaction product of step 4, and then performing drying and sieving so as to render a nickel-cobalt-manganese ternary precursor powdered sample having a core-shell structure.

### Comparative Example 2

The present comparative example provided a positive electrode material precursor and a preparation method therefor, where the preparation method therefor included following steps:
step 1: formulation of solutions: selecting nickel, cobalt, and manganese soluble salts as a raw material, formulating a metal mixed solution with a concentration of 2.0 mol/L according to a molar ratio of Ni: Co: Mn = 92.5:5:2.5, formulating a sodium hydroxide aqueous solution with a concentration of 32 wt%, and formulating an ammonia solution with a concentration of 21 wt% as a complexing agent.
step 2: adding a certain amount of pure water, NaOH aqueous solution, and aqueous ammonia into a reaction kettle, and stirring until uniform, so as to render a first base solution with pH 11.60; under stirring, constant temperature, and nitrogen protection, feeding the metal mixed solution, NaOH aqueous solution and aqueous ammonia into the reaction kettle loaded with the first base solution, a flow rate of the NaOH aqueous solution always being 0.37 times a flow rate of the metal mixed solution, based on a total capacity of the reaction kettle being N, the flow rate of the metal mixed solution being gradually increased from 2%N/h to 6%N/h; in a reaction process, when a volume of a reaction solution in the reaction kettle reaching 60% of a total volume of the reaction kettle, turning on a concentrator, and discharging the liquor by concentration equipment, at a discharge rate consistent with a total feeding rate; in a reaction process, by finely adjusting the flow rates of the NaOH aqueous solution and aqueous ammonia, gradually adjusting the pH to be within a range of 10.10-10.20 and the ammonia concentration to fluctuate within a range of 5.5-6.0 g/L within 8 h after feeding;
step 3: based on reaction conditions in step 2, adjusting a stirring rotational speed of endpoint reaction to be 55 r/min, controlling endpoint pH at 10.40-10.50, decreasing a stirring rotational speed, and increasing the pH, where in the reaction of step 3, stirring intensity was reduced, and a solution supersaturation degree was reduced, which facilitated interface growth of crystals; moreover, in a process of the reaction in step 3, system pH was increased, which was beneficial to stabilizing strength of crystal grains, thus forming a compact outer shell structure of a crystal facet; and when particle size D50 of slurry reached 13.0-14.0 µm, feeding was stopped; and
step 4: post-treatment: after reacting for a certain period of time, the particle size reaching a designated range, performing centrifugal washing on a reaction product of step 3, and then performing drying and sieving so as to render a nickel-cobalt-manganese ternary precursor powdered sample having a core-shell structure.

### Comparative Example 3

The present comparative example provided a positive electrode material precursor and a preparation method therefor. The preparation method therefor was different from that in Example 1 mainly in that, in step 3, the pH of the second base solution was 10.65, and the flow rate of the metal mixed solution was gradually increased from 3.0%N/h to 9.0%N/h; in the reaction process, by finely adjusting the flow rates of the NaOH aqueous solution and aqueous ammonia, the pH was adjusted to be within a range of 10.60-10.70 and the ammonia concentration fluctuated within a range of 5.0-6.0 g/L within 8 h after feeding; and step 4 was omitted.

### Comparative Example 4

The present comparative example provided a positive electrode material precursor and a preparation method therefor. The preparation method therefor was different from that in Example 1 mainly in that, in step 3, the pH of the second base solution was 10.65, and the flow rate of the metal mixed solution was gradually increased from 2.0%N/h to 8.0%N/h; in the reaction process, by finely adjusting the flow rates of the NaOH aqueous solution and aqueous ammonia, the pH was adjusted to be within a range of 10.60-10.70 and the ammonia concentration fluctuates within a range of 3.5-4.5 g/L within 6 h after feeding; and step 4 was omitted.

The above process conditions list specific process control parameters, and physicochemical data of the ternary precursors obtained in the Examples and Comparative Examples are subject to test results of the ternary precursors. The physicochemical data of the ternary precursors prepared in the Examples and Comparative Examples were tested, with results as shown in TABLE 1 and TABLE 2.

**TABLE 1 Physicochemical Data of Precursors**

| Item | | Example 1 | Example 2 | Example 3 | Comparative Example 1 | Comparative Example 2 | Comparative Example 3 | Comparative Example 4 |
|---|---|---|---|---|---|---|---|---|
| Intermediate layer | Average Pore Size (nm) | 217 | 182 | 151 | 102 | / | / | / |
| | Average thickness (µm) | 4.04 | 3.73 | 4.37 | 2.98 | / | / | / |
| | Porosity% | 7.595 | 7.381 | 5.863 | 6.801 | / | / | / |
| Outer shell | Average thickness (µm) | 0.63 | 0.99 | 0.58 | 2.47 | 1.52 | 3.38 | 2.93 |
| | Porosity% | 2.350 | 1.303 | 0.863 | 1.674 | 1.322 | 2.470 | 7.145 |
| Inner core | Radius of inner core (µm) | 2.75 | 1.80 | 1.39 | 2.97 | 4.25 | 2.05 | 2.36 |
| | Porosity% | 5.581 | 5.988 | 5.945 | 2.912 | 9.372 | 3.114 | 2.542 |
| D50 (µm) | | 13.859 | 12.105 | 12.075 | 13.588 | 13.968 | 10.085 | 10.021 |
| Average thickness of intermediate layer/D50 | | 0.292 | 0.308 | 0.362 | 0.22 | / | / | / |
| BET (m²/g) | | 5.61 | 5.32 | 5.69 | 13.66 | 6.73 | 10.88 | 10.94 |
| **TD** (g/cm³) | | 1.9 | 1.99 | 1.92 | 1.83 | 1.88 | 1.94 | 1.8 |

**TABLE 2 Physicochemical Data of Precursors**

| Item | | Example 4 | Example 5 | Example 6 | Example 7 | Example 8 |
|---|---|---|---|---|---|---|
| Intermediate layer | Average Pore Size (nm) | 235 | 297 | 342 | 214 | 240 |
| | Average thickness (µm) | 3.62 | 3.56 | 3.97 | 2.06 | 2.38 |
| | Porosity% | 8.452 | 8.897 | 9.471 | 7.934 | 8.050 |
| Outer shell | Average thickness (µm) | 0.76 | 0.98 | 0.89 | 1.03 | 0.71 |
| | Porosity% | 1.988 | 2.046 | 1.576 | 1.912 | 0.653 |
| Inner core | Radius of inner core (µm) | 1.83 | 1.88 | 1.72 | 2.87 | 3.21 |
| | Porosity% | 5.786 | 5.716 | 5.087 | 5.672 | 2.049 |
| D50 (µm) | | 12.123 | 12.063 | 13.577 | 12.011 | 12.083 |
| Average thickness of intermediate layer/D50 | | 0.299 | 0.295 | 0.292 | 0.172 | 0.197 |
| BET (m²/g) | | 5.22 | 5.08 | 5.77 | 5.37 | 4.83 |
| TD (g/cm³) | | 1.88 | 1.85 | 1.82 | 1.93 | 2.00 |

Positive electrode materials prepared with the ternary precursors prepared in the Examples and Comparative Examples were tested for electrochemical performance, with results as shown in TABLE 3.

Electrochemical test method: (1) preparation of the positive electrode materials: uniformly mixing 2,000 g of the precursors prepared according to the Examples and Comparative Examples respectively with Li₂CO₃ by a high-speed mixer according to a molar ratio of 1:1.05, performing sintering in a box furnace under an air atmosphere, slowly heating to a temperature of 850 °C, performing high-temperature sintering for 12 h, and cooling to a room temperature, followed by pulverizing and sieving, so as to render a nickel-cobalt-manganese ternary positive electrode material.

(2) Electrochemical performance test on button half-battery: formulating each of the above positive electrode materials, conductive carbon black, and a binder PVDF (polyvinylidene fluoride) into a slurry according to 8:1:1, and uniformly coating the slurry on an aluminum foil of 1*2 cm in length and width so as to prepare a positive electrode plate; using a metal lithium plate as a negative electrode plate, 1 mol/L LiPF6 as an electrolytic solution, EC: DMC: EMC = 1:1:1 (volume ratio) as a solvent, assembling a battery shell, the positive electrode plate, the negative electrode plate, a separator (PE double-layer ceramic separator), an elastic sheet, and a gasket into a button battery in a vacuum glove box; performing the electrochemical performance test using a LAND test system CT3002A, and testing initial Coulombic efficiency and 1 C/600-cycle (1 C = 274 mAh g⁻¹) cycle retention rate under a condition of 3.0-4.25 V, at a measurement temperature of 45°C±1°C, and humidity<40%, with results as shown in TABLE 3.

**TABLE 3 Electrochemical Performance Data of Batteries from Precursors**

| Item | 0.1 C first charge (mAh/g) | 0.1 C first discharge (mAh/g) | Initial efficiency % | Long cycle performance Capacity retention rate after 600 cycles at 45 °C |
|---|---|---|---|---|
| Example 1 | 243 | 230 | 94.7% | 89.56% |
| Example 2 | 243 | 229 | 94.2% | 89.32% |
| Example 3 | 244 | 229 | 93.9% | 89.17% |
| Example 4 | 244 | 232 | 95.1% | 89.72% |
| Example 5 | 244 | 231 | 94.7% | 89.61% |
| Example 6 | 243 | 228 | 93.8% | 88.97% |
| Example 7 | 242 | 228 | 94.2% | 88.52% |
| Example 8 | 242 | 229 | 94.6% | 88.67% |
| Comparative Example 1 | 242 | 228 | 93.2% | 88.13% |
| Comparative Example 2 | 242 | 226 | 93.4% | 88.22% |
| Comparative Example 3 | 241 | 225 | 93.4% | 88.15% |
| Comparative Example 4 | 242 | 227 | 93.8% | 88.06% |

Data analysis is as follows.

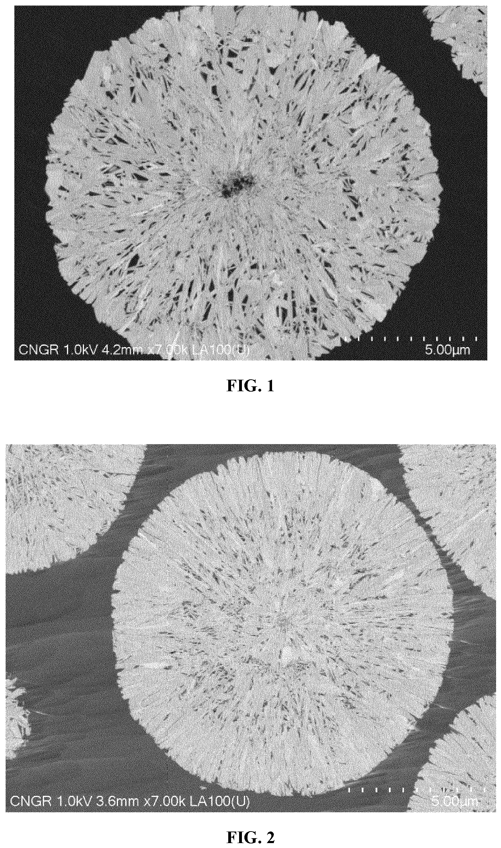

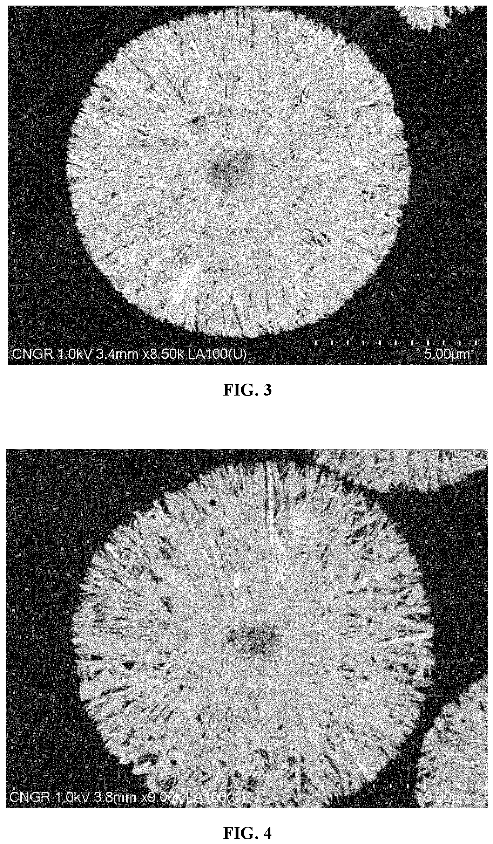

Examples 1-3 all had a three-layer structure, where the intermediate layer was relatively loose and had a macroporous structure, and the outer shell was relatively compact and had high initial efficiency and capacity retention rate. A CP structure of Example 1 is as shown in FIG. 1. Comparing Comparative Example 1 with the Examples, since the intermediate layer had a relatively small pore size, with a CP structure as shown in FIG. 2, the initial efficiency thereof was greatly reduced, indicating that the macroporous structure of the intermediate layer is more beneficial to using the capacity, and at the same time, the outer shell was thicker, and the capacity retention rate was greatly reduced, indicating that the thickness of the outer layer greatly affects the cycle performance. Comparing Comparative Example 2 with the Examples, since there was a two-layer structure on the whole, and the outer layer was relatively compact, although the capacity retention rate was not very poor, the initial efficiency thereof was too low. Comparative Examples 3 and 4 both had a two-layer structure, with CP structures as shown in FIG. 3 and FIG. 4, the initial efficiency and the capacity retention rate were neither as good as that in the Examples, also indicating significance of the intermediate layer having a macroporous structure in improving the use of the capacity and the cycle performance.

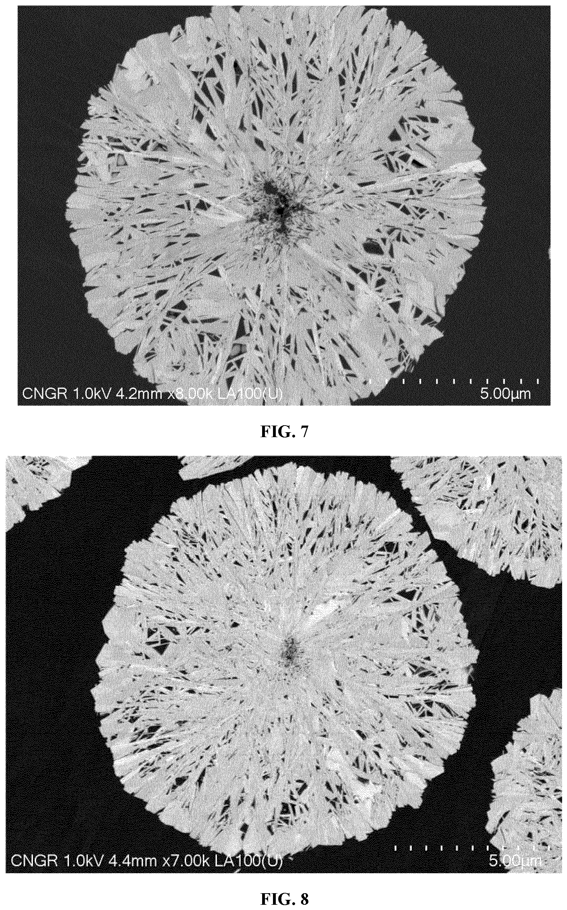

By comparing Example 1 with Example 7, and comparing Example 4 with Example 8, a main difference lies in different thickness proportions of the intermediate layers (as shown in FIG. 8), and thus, a larger proportion of the thickness of the intermediate layer facilitates improving comprehensive electrochemical performance of the material.

The above-mentioned are merely for preferred embodiments of the present application, but are not intended to limit the present application. For those skilled in the art, various modifications and changes could be made to the present application. Any modifications, equivalent substitutions, improvements and so on made within the spirit and principle of the present application should be covered within the scope of protection of the present application.

## Claims

1. A positive electrode material precursor, **characterized in that** the precursor comprises a secondary particle composed of primary particles, and the secondary particle comprises an inner core, an intermediate layer and an outer shell, wherein the intermediate layer has a porosity greater than that of the outer shell, and an average pore size of the intermediate layer ranges from 130 nm to 500 nm.

2. The positive electrode material precursor according to claim 1, **characterized in that** the primary particles at least meet one of the following conditions:
(a) the primary particles are plate-shaped;
(b) the primary particles have an average length ranging from 200 nm to 1200 nm, an average width ranging from 100 nm to 500 nm, and an average aspect ratio ranging from 1 to 6; and
(c) the primary particles have an average length ranging from 800 nm to 1000 nm, an average width ranging from 200 nm to 400 nm.

3. The positive electrode material precursor according to claim 1 or 2, **characterized in that** the outer shell at least meets one of the following conditions:
(a) the outer shell has a porosity less or equal to 3%;
(b) the outer shell has a thickness between 1/22 and 1/12 of a particle size of the secondary particle; and
(c) a difference Δ between a porosity of the intermediate layer and a porosity of the outer shell (the intermediate layer - the outer layer) ranges from 5% to 20%.

4. The positive electrode material precursor according to any one of claims 1-3, **characterized in that** the intermediate layer meets at least meets one of the following conditions:
(a) the intermediate layer has a porosity ranging from 5% to 20%;
(b) the intermediate layer has an average pore size ranging from 150 nm to 300 nm; and
(c) the intermediate layer has a thickness between 1/2.5 and 1/5 of a particle size of the secondary particle.

5. The positive electrode material precursor according to any one of claims 1-4, **characterized in that** the positive electrode material precursor meets at least meets one of the following conditions:
(a) a porosity of the intermediate layer is greater than that of the inner core, and the porosity of the inner core is greater than that of the outer shell;
(b) the inner core has a porosity ranging from 2% to 15%;
(c) the inner core has a radius between 1/4 and 1/10 of a particle size of the secondary particle;
(d) the positive electrode material precursor has a specific surface area ranging from 3 m²/g to 20 m²/g, preferably 4-12 m²/g;
(e) the positive electrode material precursor has a tap density ranging from 1.5 g/cm³ to 3.0 g/cm³;
(f) a particle size D50 of the positive electrode material precursor ranges from 8 µm to 20 µm;
(g) a proportion of a molar amount of nickel in a total molar amount of metallic elements in the positive electrode material precursor is greater than or equal to 50%, preferably greater than or equal to 70%;
(h) a general chemical formula of the precursor is NiₓCo_{y}Mn_{z}Mₐ(OH)₂, where 0.5≤x<1, 0≤y≤0.5, 0≤z≤0.5, and x+y+z+a=1, and a mass fraction of M in the precursor is less than 10,000 ppm; and
(i) a proportion of a molar amount of nickel in a total molar amount of metallic elements in the outer shell is less than a proportion of a molar amount of nickel in a total molar amount of metallic elements in the intermediate layer or the inner core.

6. The positive electrode material precursor according to claim 5, **characterized in that** the M is at least one of Al, Mg, Zr, W, Si, B, P, Ca, Nb and Ti.

7. The positive electrode material precursor according to claim 5 or 6, **characterized in that** 0.7≤x<1, 0≤y≤0.3, and 0≤z≤0.3.

8. A preparation method for the positive electrode material precursor according to any one of claims 1-7, comprising:
preparing a metal mixed solution containing a nickel element, a precipitant solution and a complexing agent solution;
injecting the metal mixed solution, a precipitant and a complexing agent into a first base solution, and performing a first co-precipitation reaction, so as to render a first intermediate product, wherein the first base solution comprises the precipitant, the complexing agent and water;
injecting the metal mixed solution, the precipitant and the complexing agent into a second base solution, and performing a second co-precipitation reaction, so as to render a second intermediate product, wherein the second base solution comprises the first intermediate product, the precipitant, the complexing agent and water; and
injecting the metal mixed solution, the precipitant and the complexing agent into a reaction solution containing the second intermediate product, and performing a third co-precipitation reaction, so as to render particles of the precursor.

9. The preparation method for the positive electrode material precursor according to claim 8, meeting at least one of following a-h:
a. a total concentration of metallic elements in the metal mixed solution ranges from 0.5 mol/L to 5.0 mol/L, preferably 1.0-2.0mol/L;
b. pH of the reaction solution in the third co-precipitation reaction is higher than pH of a reaction solution in the first co-precipitation reaction, and the pH of the reaction solution in the first co-precipitation reaction is higher than pH of a reaction solution in the second co-precipitation reaction;
c. an ammonia concentration of the reaction solution in a process of the third co-precipitation reaction is greater than an ammonia concentration of a reaction solution in the second co-precipitation reaction;
d, a stirring speed in a process of the third co-precipitation reaction is greater than that in a process of the second co-precipitation reaction;
e. in a process of the first co-precipitation reaction, pH of a reaction solution is maintained at 10.0-10.5, preferably 10.35-10.45; optionally, an ammonia concentration of the reaction solution is maintained at 3-5 g/L, preferably 3.5-4.5g/L;
optionally, pH of the first base solution ranges from 11.00 to 12.00; and
optionally, based on a total capacity of a reaction kettle being N, a flow rate of the metal mixed solution is gradually increased from (0.8-1.2)%N/h to (4.5-5.5)%N/h within 4-8 h; optionally, a flow rate of the precipitant solution is between 0.3 times and 0.4 times the flow rate of the metal mixed solution;
f. in a process of the second co-precipitation reaction, pH of a reaction solution is maintained at 9.5-11.0, preferably 10.00-10.70; optionally, an ammonia concentration of the reaction solution is maintained at 4.0-7.0 g/L, preferably 4.0-6.0g/L;
optionally, pH of the second base solution ranges from 10.00 to 10.90; and
optionally, based on a total capacity of a reaction kettle being N, a flow rate of the metal mixed solution is gradually increased from (2-3)%N/h to (8-10)%N/h within 4-8 h; optionally, a flow rate of the precipitant solution is between 0.3 times and 0.4 times the flow rate of the metal mixed solution;
g, in a process of the third co-precipitation reaction, pH of the reaction solution is maintained at 10.0-11.0; optionally, an ammonia concentration of the reaction solution is maintained at 7.0-9.0 g/L;
optionally, based on a total capacity of a reaction kettle being N, a flow rate of the metal mixed solution is (8-10)%N/h; optionally, a flow rate of the precipitant solution is between 0.3 times and 0.4 times the flow rate of the metal mixed solution; and
h, the first co-precipitation reaction and/or the second co-precipitation reaction and/or the third co-precipitation reaction are carried out under inert-gas protection.

10. The preparation method according to claim 9, the precipitant is sodium hydroxide.

11. The preparation method according to claim 10, a concentration of the precipitant in the precipitant solution ranges from 20 wt% to 50 wt%, preferably 30-35 wt%.

12. The preparation method according to claim 9, the complexing agent is aqueous ammonia and a concentration of the complexing agent in the complexing agent solution ranges from 10 wt% to 50 wt%, preferably 20-25 wt%.

13. A positive electrode material, **characterized in that** a raw material thereof comprises the positive electrode material precursor according to any one of claims 1-7 or the positive electrode material precursor obtained by the method according to any one of claims 8-12.

14. A lithium-ion battery, comprising the positive electrode material according to claim 13.

15. An electrical device, comprising the lithium-ion battery according to claim 14.
